# EUROPÄISCHE PATENTSCHRIFT

(11) **EP 0 760 096 B1**
(45) Veröffentlichungstag und Bekanntmachung des Hinweises auf die Patenterteilung: **01.04.1998**
(21) Anmeldenummer: 95918618.0
(22) Anmeldetag: 28.04.1995
(51) Int. Cl.: G01N 29/02

(54) **GASSENSOR BESTEHEND AUS OBERFLÄCHENWELLEN-BAUELEMENTEN**
GAS SENSOR CONSISTING OF SURFACE WAVE COMPONENTS
DETECTEUR DE GAZ COMPRENANT DES COMPOSANTS A ONDES DE SURFACE

(30) Priorität: 17.05.1994 DE 4417170
(43) Veröffentlichungstag der Anmeldung: 05.03.1997
(73) Patentinhaber: Forschungszentrum Karlsruhe GmbH, 76133 Karlsruhe (DE)
(72) Erfinder: RAPP, Michael, D-69117 Heidelberg (DE); VOIGT, Achim, D-76351 Linkenheim-Hochstetten (DE)
(74) Vertreter: Rückert, Friedrich, Dr.
(86) Internationale Anmeldenummer: EP9501618
(87) Internationale Veröffentlichungsnummer: WO9531718

(56) Entgegenhaltungen:
- US-A- 4 895 017
- US-A- 5 325 704
- PATENT ABSTRACTS OF JAPAN vol. 018 no. 384 (P-1772) ,19.Juli 1994 & JP,A,06 109710 (MARUYASU KOGYO KK) 22.April 1994,

## Beschreibung

Die Erfindung betrifft einem Gassensor nach dem Oberbegriff des Patentanspruchs 1, wie er aus der US 4 312 228 bekannt ist.

Modifizierte akustische Oberflächenwellen oder Surface Acoustic Wave (SAW) Bauelemente können für die chemische Sensorik von Gasen oder Flüssigkeiten eingesetzt werden, indem man sie mit einer entsprechend chemisch reaktiven Beschichtungen versieht. Bei der Ab- oder Adsorption des Analyten verändern sich die Masse der Beschichtung sowie deren elastische Parameter, wodurch sich die Schallgeschwindigkeit der Oberflächenwelle ebenfalls verändert. Um die Änderung der Schallgeschwindigkeit einer Oberflächenwelle möglichst exakt und trotzdem einfach zu messen ist es üblich, ein beschichtetes SAW-Bauelement als frequenzbestimmendes Element einer Oszillatorschaltung zu schalten. Dies ist aus H. Wohltjen, R. Dessy: SAW Probe for Chemical Analysis, Parts 1 - 3; Analytical Chemistry, 51(1979), 1458 - 1475. und H. Wohltjen: Mechanism of Operation and Design Considerations for SAW Device Vapour Sensors; Sensors and Actuators, 5(1984) 307 - 325 bekannt.

Aus der Schallgeschwindigkeitsänderung ergibt sich eine in guter Näherung proportionale Änderung der Oszillationsfrequenz, welche mit einer hohen Auflösung von typischerweise 10⁻⁶ gemessen werden kann. Durch eine entsprechende Wahl von Sorptionsschichten lassen sich mit dieser Technik eine nahezu beliebige Vielzahl von gasförmigen Analyten untersuchen. Hauptinteresse finden hierbei solche Stoffe, die mit anderen chemischen Mikrosensoren nur schwer einer qualitativen und quantitativen Bestimmung zugänglich sind: Organische Lösungsmittel, wie beispielsweise Kohlenwasserstoffe (Hexan, Oktan, Decan, versch. Kraftstoffe), Alkohole (Methanol, Ethanol), halogenierte Kohlenwasserstoffe (CKW's, FCKW's) und Aromaten (Benzol, Toluol).

Um die oben genannten Stoffe analysieren zu können, werden für die SAW-Bauelemente Substanzen ausgewählt, die mit dem betreffenden Analyten eine reversible Sorptionsreaktion eingehen. Hierfür kommen meist Polymerfilme in Betracht, die je nach Erfordernis mit verschiedenen Verfahren, wie Spin-Coating, Sol-Gel-Beschichtung oder reaktive Abscheidung auf die SAW-Substrate aufgebracht werden. Das Sorptions- und Lösungsverhalten der Analyten in den betreffenden Beschichtungen wird durch das jeweilige Verhältnis ihrer Polaritäten, Polarisierbarkeiten, Aziditäten, Basizitäten und verschiedenen Strukturparametern bestimmt. Allerdings weisen die meisten verwendbaren beschichtungsfähigen Polymere eine zu geringe Selektivität hinsichtlich verschiedener organischer Komponenten auf.

Aus der EP 0 509 328 A2 ist eine Anordnung von 3 SAW bekannt, die jedoch hinter einander angeordnet sind. Dies führt zu unterschiedlichen Strömungsverhältnissen in den einzelnen Sensoren.

Des weiteren ist aus der EP 0477 648 A1 eine Anordnung von mehr als 2 SAW mit unterschiedlicher Beschichtung bekannt. Eine besondere Anordnung der Sensoren ist hier nicht vorgesehen.

Aufgabe der Erfindung ist es, einen Gassensor der e. g. Art zur Verfügung zu stellen, mit dem verschiedene Komponenten gleichzeitig nachweisbar sind.

Gelöst wird diese Aufgabe durch die Merkmale des Patentanspruchs 1. Die Unteransprüche beschreiben vorteilhafte Ausgestaltungen des Gassensors.

Durch die Kombination mehrer Sensoren mit Beschichtungen unterschiedlicher Eigenschaften lassen sich Sensitivitätsmuster gewinnen, die nach einer chemometrischen Auswertung (PLS-Algorithmus) auch aus einer Analytenmischung die geforderte qualitative und quantitative Bestimmung zulassen. Unter Zuhilfenahme des Linear Solvation Energy Relationship (LSER) Modells läßt sich zusätzlich eine theoretische Vorhersage der Sorptionseigenschaften verschiedenster Schichtmaterialien treffen. Dadurch wird eine gezielte Optimierung durch Auswahl der Schichtsubstanzen bzw. deren Kombination möglich. Mit dem so konzipierten Schichtsystem sind selektive Bestimmungen einer großen Vielfalt von gasförmigen organischen Analyten erreichbar

Minimale Leitungslängen durch radiale Abgänge vom gemeinsamen Knoten, bewirken geringere Signalverluste durch Dämpfung und geringere Übersprechgefahr der einzelnen Kanäle.

Eine radiale Anordnung der Gaszuführung gestattet ebenfalls in einfachster Weise eine äquivalente, parallele und synchrone Anströmung der Prüfgase. Dies ist ein entscheidender Vorteil für die Signalauswertung bei den anzuwendenden chemometrischen Auswerteverfahren, sowie von Auswerteverfahren mit Hilfe automatischer Reaktionsmustererkennung durch neuronale Netze.

Die Erfindung wird im folgenden anhand eines Ausführungsbeispiels mit Hilfe der Figuren näher erläutert.

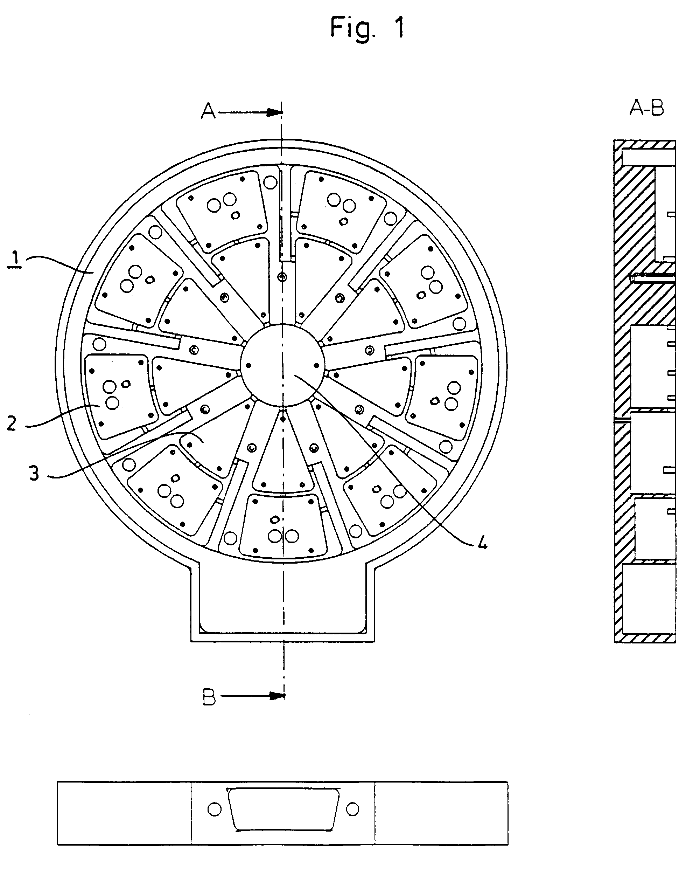

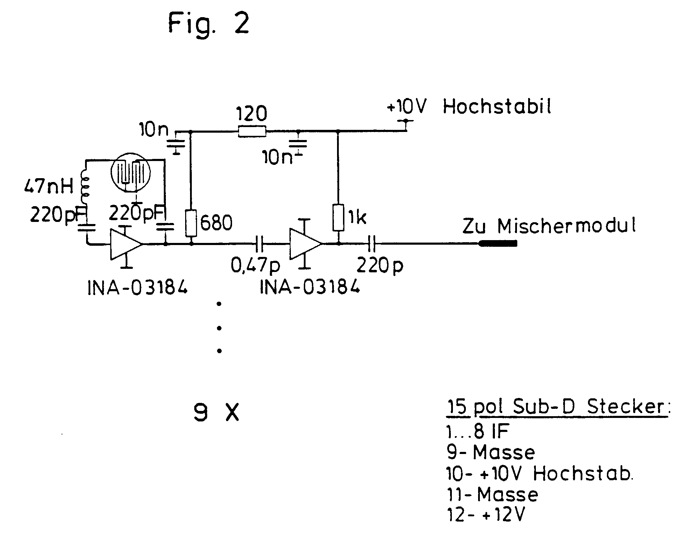

Die Fig. 1 zeigt das Unterteil des Gehäuses, welches die SAW's und die elektronischen Module trägt und die Fig. 2, 3 und 4 zeigen Schaltpläne dieser Module.

Die Fig 1 zeigt das Unterteil 1 des Gehäuses zusammen mit einem Schnitt, Von der Seite, welche die elektronischen Module 2, 3, 4 trägt. Die SAW's befinden sich auf der anderen Seite gegenüber den Modulen 2. Sie sind hier nicht dargestellt. Dieses SAW-Sensoarray zur analytischen Bestimmung von Gasen und Gasgemischen, besteht aus 9 SAW-Oszillatoren, wobei ein Oszillator als gemeinsame Referenz für 8 Sensoroszillatoren dient. Das Gerät ist jedoch erweiterbar auf n Oszillatoren mit einer gemeinsamen Referenz und entsprechend n-1 Sensoroszillatoren, wobei n größer als 3 sein sollte.

Das Signal des Referenzoszillators wird über einen gemeinsamen, impedanzangepassten Knotenpunkt auf einzelne (n-1) Mischstufen verteilt. Die Anordnung mit einem gemeinsamen Knotenpunkt ermöglicht eine Ansteuerung der einzelnen Mischereingänge mit gleichem HF-Pegel

Das Gehäuseunterteil 1 und das nicht dargestellte Gehäuseoberteil sind aus Metall gefertigt. Das Gehäuseoberteil enthält einen zentralen rotationssymmetrischen Gaszuführungsraum, von welchem aus radial nach außen gleich ausgebildete Gaszuführungsleitungen zu Ausnehmungen zur Aufnahme der SAW's führen und Gasauslaßleitungen mit gleichem pneumatischen Widerstand von allen Ausnehmungen nach außen.
Die hohe Temperaturleitfähigkeit des Metallgehäuses ermöglicht gleichmäßige Temperaturverteilung im gesamten Gehäuse, bei niedrigen Herstellungskosten und mobile Einsatzmöglichkeiten durch kompakten Aufbau.

Geringe Probenvolumina bei paralleler Gasanströmung, bewirken kurze Ansprechzeiten.

Durch den Aufbau der SAW-Oszillatoren in einem gemeinsamen kompakten monolithischen Fräsgehäuse, bestehend aus einzelnen Kammern, welche jeweils die einzelnen Oszillatorschaltungen und davon getrennt in seperaten Kammern die Mischstufen enthält, wird eine noch bessere Temperaturverteilung (hohe Temperaturleitfähigkeit des Gehäuses), sowie geringes Übersprechen und damit minimale Gefahr des gegenseitigen "Einlockens" der Oszillationfrequenzen durch optimale Abschirmung des auf massepotential liegenden Gehäuses erreicht.

Üblicherweise bestehen die kommerziell gefertigte Transducer aus Aluminium (beste akustoelektrische Eigenschaften), das chemisch nicht ausreichend resistent ist, um einen längeren stabilen Betrieb eines SAW-Chemosensors zu gewährleisten. Daher ist beispielsweise Gold als Transducermaterial in der SAW-Gassensorik besser geeignet. Eine andere Möglichkeit ist die nachträgliche chemische Passivierung der Aluminiumtransducer durch eine kontrollierte Oxidation des Aluminiums oder mit einer inerten Beschichtung (z. B. Polyimid) der Transducer.

Quarz als Substatmaterial für SAW-Bauelemente besitzt je nach Wahl des Kristallschnittes eine bestimmte Temperatur mit minimalstem Temperaturgang der Oberflächenwellenschallgeschwindigkeit, die sogenannte Kompensationstemperatur. Wählt man nun gerade diese als Array-Betriebstemperatur, so ergibt sich eine geringere Störempfindlichkeiten bezüglich kleinen Temperaturschwankungen.

Entsprechend dem Linear Solvation Energy Relationship (LSER)-Modell ergeben sich fünf verschiedene, energetisch unterschiedliche Anteile, die für das Lösungsverhalten eines organischen Lösungsmittels in eine feste Phase bestimmend sind. Für die Bindungsenthalpien läßt sich ein analytischer Zusammenhang formulieren (Formel 9, s 95 aus J. W. Grate, M. H. Abraham: Solubility Interactions and the design of Chemically Selective Sorbent Coatings for Chemical Sensors and Arrays; Sensors and Actators B, 3(1991), 85-111).

Die einzelnen Energietherme lassen sich durch Löslichkeitsparameter charakterisieren, woraus sich fünf Parameter für die gasförmige und fünf dazu jeweils korrespondierende Größen für die feste Phase ergeben. Diese Parameter stellen gewissermaßen eine Gewichtung der für den Lösungsprozeß verantwortlichen Energieterme dar und sind für die verschiedenen Stoffe unterschiedlich.

Eine optimales Schichtsystem ist nun dadurch gekennzeichnet, daß Schichtsubstanzen mit möglichst unterschiedlicher Parameterzusammensetzung gewählt werden. Dadurch lassen sich für das Sensorarray mit einem solchen Schichtsystem möglichst gute Differenzierungen erwarten.

Wenn es möglich ist Substanzen zu finden, für die jeweils diese Parameter extremal bzw. idealerweise wenn nur einer maximal, die anderen jeweils minimal sind, so läßt sich die Anzahl der zu Differenzierung notwendigen Schichten auf die Anzahl der verantwortlichen Parameter, nämlich fünf, reduzieren.

Die Tabelle zeigt beispielhaft Substanzen, für die diese Bedingung zutrifft und repräsentiert damit eine Auswahl von Substanzen. In der Mitte dargestellt sind die tatsächlichen Werte. Der Wertevergleich auf der rechten Seite zeigt, wie jeweils einige Werte maximal sind, während die korrespondierenden Größen minimal sind. Trotz der niedrigen Anzahl der Sensoren, läßt sich mit einem so bestückten SAW-Sensorarray, prinzipiell die bestmöglichen Analysen mithilfe einer chemometrischen Mustererkennung erzielen.

Bei der günstigen Anzahl von acht Sensoroszillatoren und einer gemeinsamen Referenz im Array sollen die drei zusätzlichen Sensoren speziell typische Störgrößen analysieren. Für solche Stoffe wird damit eine größere Redundanz erzielt, wodurch sich Gemische, welche Störkomponenten wie z. B. Wasser, Stickoxide und Ammoniak enthalten, dann signifikanter bestimmen lassen.

Das Array und seine Auswertung ist für acht Signalgrößen optimal, da eine digitale Auswerteelektronik mit handelsüblichen Mikrochips ohnehin mit 8 Bit-multiplen Rastern arbeitet.

Wegen dem großen Temperatureinfluß auf die Oszillatorfrequenzen, muß die Temperatur des Sensorkopfes hochkonstant gehalten werden. Durch den kompakten Aufbau des Sensorkopfes ist es möglich mittels Peltierelemente die Temperatur des Meßgases, sowie der Sensoren samt Ansteuerelektronik, in weiten Bereichen präzise zu Regeln.

Die Gleichgewichtsverteilung zwischen Analyt in der Gasphase und Analyt in der festen Phase (absorbiert) hängt von der Temperatur ab. Bei niedrigen Temperaturen liegt die Gleichgewichtseinstellung mehr bei der absorbierten Phase, wodurch eine höhere Sensorempfindlichkeit erzeugt wird. Bei höheren Temperaturen verhält es sich invers. Die Gleichgewichtsverteilung liegt mehr bei der Gasphase und der Sensor wird unempfindlicher. Dafür wird aber die Gleichgewichtseinstellung schneller erreicht.

Somit kann durch die Wahl der Betriebstemperatur des Sensorkopfes Empfindlichkeit und Ansprechverhalten nach geforderten Spezifikationen angepaßt werden.

Vorteilhaft ist eine Thermostatisierung mittels Peltierelementen direkt auf dem Gehäusedeckel. Die Verlustwärme kann entweder mittels Konvektionswärmeübertrager direkt am Element oder indirekt, jedoch effektiver, durch einen gepumpten Füssigkeitskreislauf an die Umgebung abgegeben werden.

Bei Thermostatisierung mittels Flüssigkeitswärmeübertragers (z. B. Wasser) wird das Wasser mit Hilfe einer externen Thermostatisier-Einheit temperiert und dem Übertrager im Kreislauf zu- und abgeführt.

Die einzelnen SAW-Sensoren im Array sitzen steckbar auf der jeweiligen Oszillatorelektronik. Als Grundaufbau bieten sich die für die käuflichen SAW-Bauelemente üblichen TO-Sockel (z. B. TO-39) an. Das Array ist dann einfach, schnell und preisgünstig für die verschiedenen Anwendungen (Analytenzusammensetzung) umzurüsten. Die einzelnen Sensoren sind dann für Wartungs- oder Kontrollarbeiten auch leicht zu überprüfen.

Für die Beschichtung der Sensoren mit unterschiedlichen Schichten ist das Spincoating-Verfahren günstig, da die auf dem Sockel bereits montierten und mit den Anschlußstiften verbondeten SAW-Bauelemente zentrisch auf die Drehachse eines Spin-Coaters gesteckt werden können.

Es ist auch Beschichtung mit dem Spraying-Verfahren möglich.

Die Fig 2 zeigt das Schaltbild für eine optimale SAW Oszillatorschaltung 2, die ein besseres Signal- zu Rauschverhältnis (höhere Empfindlichkeit), ein kleineres Detektionslimit und eine bessere Langzeitstabilität der SAW-Sensoren ermöglicht als die u. a. Oszillatorschaltung.

Es ist bereits aus A. Venema et al.: Design Aspects of SAW Gas Sensors; Sensors and Actuators, 10 (1986), S. 47 - 64, eine für den Zweck der SAW-Gassensorik optimierte Oszillatorschaltung bekannt, die ein sogenanntes AGC (automatic gain control) ausnützt. Unseres Erachtens bietet diese Schaltung jedoch keine wesentlichen Vorzüge, da bei der automatischen Anpassung des Verstärkungsfaktors Phasendriften entstehen, die eine ungewollte Frequenzdrift im Oszillatorkreis bewirken. Die in diesem Beitrag angeblich notwendigen Anpassung des Verstärkungsfaktors sind technisch nur bei Frequenzen unter 200 MHz ohne zu großen Aufwand realisierbar und bei der Verwendung von SAW-Bauelementen mit geeigneter Übertragungscharakterisik überhaupt nicht notwendig.

Für die Entwicklung eines SAW-Oszillators muß das spezielle Verhalten von beschichteten und unbeschichteten SAW-Resonatoren auf Quarz-Basis berücksichtigt werden. Beschichtete SAWs besitzen eine hohe Dämpfung und eine geringe Phasenänderung im Resonanzpunkt. Die aktive Oszillatorelektronik muß nun so ausgelegt werden, daß sie zum einen eine genügend hohe Verstärkung besitzt, um die Dämpfung zu kompensieren und zum anderen in ihrem Frequenz-Phasenverhalten der Änderung des Frequenz-Phasenverhaltens der beschichteten SAW's folgen kann um die elektrische Oszillationsbedingung aufrecht zu erhalten.

Diese Bedingung erfüllt der MMIC-Verstärker INA-03184. Seine S-Parameter bei 433 MHz ergeben in Kombination mit einer 47 nH-Spule eine optimale Übertragungscharakteristik des aktiven Oszillatorelements bei einer Stromaufnahme von nur 7 mA. Über die 220 pF Kondensatoren wird die Hochfrequenz in das SAW-Bauteil ein- bzw. ausgekoppelt.

Die Oszillationsfrequenz wird am Ausgang des Oszillatorverstärkers über einen 0,47 pF Kondensator mit hoher Impedanz ausgekoppelt und einem nachgeschalteten Bufferverstärker zugeführt. Dieser dient dazu durch seine hohe Rückwärtsisolation (S12) den empfindlichen Oszillationskreis elektrisch vom Rest der Schaltung zu Trennen, damit der Einfluß von Störsignalen oder Impedanzänderungen auf die Oszillationsfrequenz minimal bleibt.

Die Oszillatorelektronik, befindet sich in unmittelbarer Nähe der SAW-Sensoren. Die SAW-Bauelemente werden direkt auf die Oszillatorelektronik gesteckt.

Ein Oszillatorkreis ist extrem empfindlich auf Schwankungen der Phasenlage, welche durch minimale Impedanzänderungen im Schwingkreis entstehen können. In der Praxis wird dies hauptsächlich durch bewegliche Leitungen verursacht, weshalb auf diese ganz verzichtet wurde.

In Abhängigkeit von den Beschichtungsparametern ändern sich die elektroakustischen Parameter und damit Phasenlage und Dämpfung der SAW-Sensoren. Die Oszillatorelektronik ist in der Lage solche Parameteränderungen zu tolerieren und ohne Neukalibration ein zufriedenstellende Frequenzstabilität (± 2 Hz, bei 433,92 MHz Oszillationsfrequenz) aufzuweisen.

Durch die gezielte Auswahl von Verstärkern mit minimalem Phasengang und gleichzeitig auf die SAW-Sensoren abgestimmten s-Parametern konnte die gewünschte Charakteristik erzielt werden. Diese Bedingungen werden auch von Breitband-Verstärkern wie beispielsweise verschiedenen Videoverstärkern erfüllt.

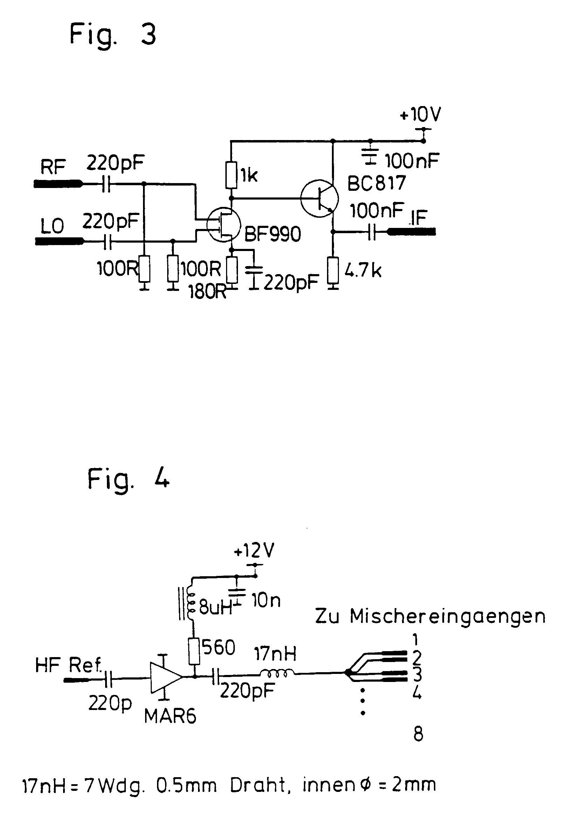

Die Fig 3 zeigt die Schaltung für einen Dual-Gate-Mischer 3.

Die Frequenzen von Meßoszillatoren und Referenzoszillator werden in Mischern in eine niederfrequente Zwischenfrequenz heruntergemischt und durch eine nachfolgende Zählelektronik gezählt.

Als Mischerschaltung wurde ein Dual-Gate-FET gewählt, mit nachfolgender Kollektorschaltung als Impedanzwandler.

Diese bietet folgende Vorteile:
a) es werden auch kleine Eingangssignale linear gemischt;
b) die Impedanz der Mischereingänge kann durch die Gate-Widerstände in Grenzen frei gewählt werden;
c) geringe Stromaufnahme (ca. 5 mA);
d) kleiner Ausgangswiderstand (ca. 100 Ω);
e) durch die hohe Steilheit der Mischereingänge ergibt sich gleichzeitig eine Verstärkung des Mischproduktes;
f) in SMD oder Hybridtechnik realisierbar.

Fig. 4 zeigt die Schaltung für den Powersplitter 4.

Das Signal des Referenzoszillators wird verstärkt und einem Sternpunkt mit der Impedanz 12.5 Ω zugeführt. Die Spule in Reihe zum Verstärkerausgang dient zur Impedanzanpassung des 50 Ω Verstärkerausgangs an den Sternpunkt. Von diesem Sternpunkt ausgehend verteilt sich das Referenzsignal auf acht Mischereingänge mit einer Eingangsimpedanz von je 100 Ω

Durch die Verwendung von geeigneten SAW-Bauelementen werden folgende Vorteile erreicht:
a) Hohe Phasensteilheit in Resonanzpunkt,
b) geringe Zunahme der Einfügungsdämpfung mit Beschichtung. Dies wird vorwiegend von speziellen SAW-Verzögerungsleitungen erfüllt, die eine große Transducerlänge aufweisen. Die Frequenzbetimmtheit erfolgt in diesem Fall durch die aktive Transducerstruktur und wird bei Beschichtung weniger stark negativ beeinflußt, wie dies bei den SAW-Resonatoren der Fall ist.
c) allgemein geringe Einfügungsdämpfung unabhängig von der Beschichtung. Dies erlaubt eine entsprechend geringe Verstärkung im Oszillationskreis und damit ein besseres Signal- zu Rauschverhältnis des gesamten Oszillators,
d) Verwendung von Bauelementen mit Transmissionsfrequenzen von 250 - 500 MHz. In diesem Messbereich ergibt sich eine Optimum aus Empfindlichkeit (≈ f²), Signal- zu Rauschverhältnis (≈f) und Handhabbarkeit (≈ 1/f).

Durch die Verwendung elektronischer Bauelemente mit extrem niedriger Leistungsaufnahme wird ein unerwünschtes Aufheizen der SAW-Sensoren minimiert. Der oben erwähnte Verstärkertyp, die meisten anderen (schlechteren) Alternativen und die üblicherweise verwendeten Bauelemente für die Mischstufen, die sogenannte "double balanced mixern" enthalten, weisen einen relativ hohen Leistungbedarf auf. Dies führt zu einer größeren thermischer Belastung der SAW-Sensoren. Sie wird insbesondere hinsichtlich der Miniaturisierung eines ganzen Arrays immer mehr zum Problem, da die notwendige thermische Vorkonditionierung des Probegases beim Anströmen der Sensoren ad absurdum geführt werden würde.

Eine niedrigere Leistungsaufnahme weisen sogenannte MMIC (microwave monolithic integrated cicuits)Verstärker auf. Besonders vorteilhaft erwieß sich hierbei der Typ INA03184 von Advantec/USA, woraus sich eine Leistungsaufnahme von 120 mW pro Oszillatormodul ergibt.

Mit einer aktiven Dual Gate FET-Mischerschaltung anstatt der üblichen Schaltung mit "double balanced mixern" kann die hierfür notwendige Ansteuerelektronik entfallen und die Leistungsaufnahme pro Mischmodul auf 50 mW begrenzt werden.

Eine kompakte Bauform von etwa einer Fläche von 1 cm² kann durch konsequente Anwendung von SMD-Bauteilen und durch optimales Schaltungslayout erzielt werden. Durch diese Maßnahme sind diese Schaltung gut geeignet für die Kombination mehrerer SAW-Sensoroszillatoren zu dem beschriebenen Gassensor.

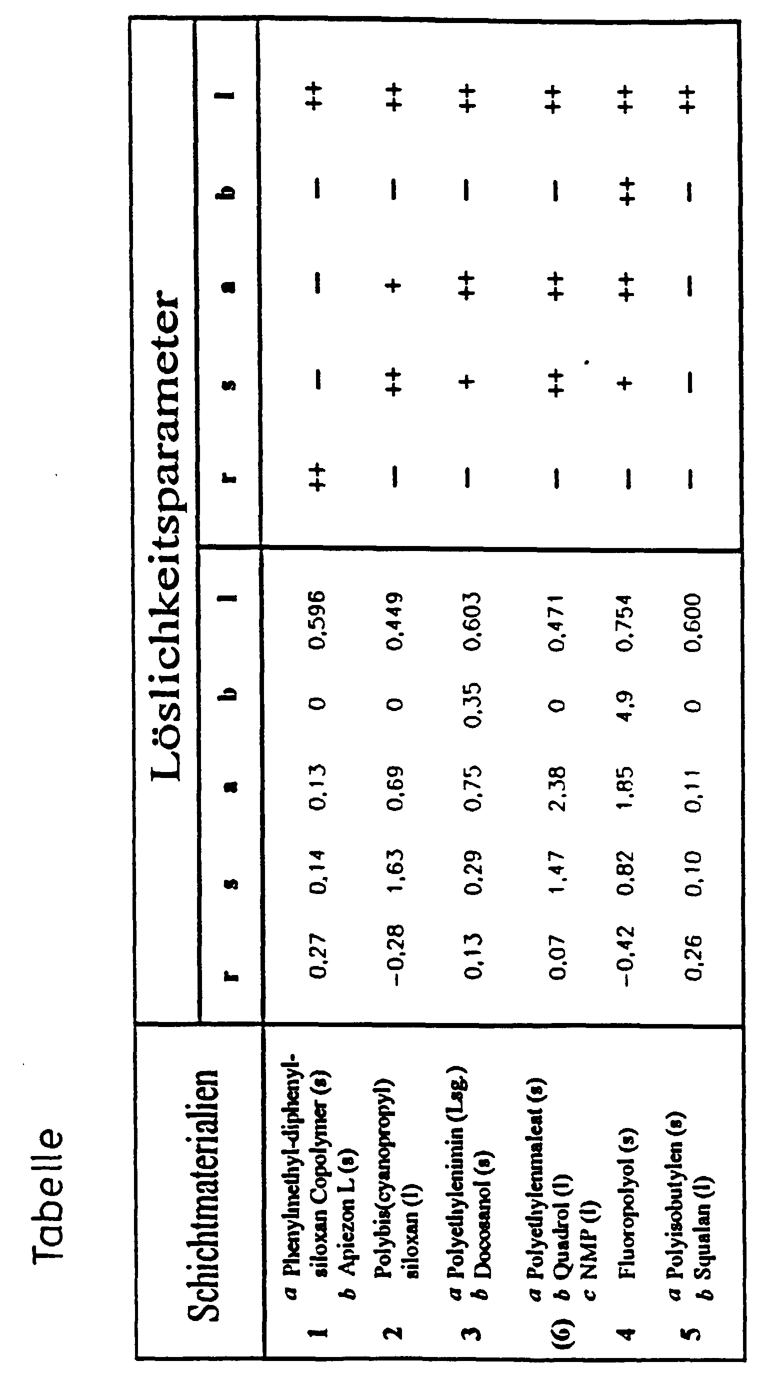

## Patentansprüche

1. Gassensor bestehend aus mindestens 2 Oberfächenwellen-Bauelementen mit Treiber- und Verstärkerschaltungen in einem Gehäuse mit Gaszuführung und Gasabführung, der folgende Merkmale enthält:
a) mindestens vier SAW-Oberflächenwellenbauelemente, die in je einer Ausnehmung im Gehäuse angeordnet sind, wobei die Ausnehmungen im Gehäuse radial ausgerichtet auf einem Kreis angeordnet sind,
b) einen zentralen rotationssymmetrischen Gaszuführungsraum, von welchem aus radial nach außen gleich ausgebildete Gaszuführungsleitungen zu den Ausnehmungen führen und
c) Gasauslaßleitungen mit gleichem pneumatischen Widerstand von allen Ausnehmungen nach außen.

2. Gassensor nach Anspruch 1, dadurch gekennzeichnet, daß sich in unmittelbarer Nähe der Oberflächenwellenbauelemente auf der anderen Seite eines Unterteils (1) des Gehäuses je eine Oszillatorschaltung (2) diesen gegenüber befindet.

3. Gassensor nach Anspruch 1 oder 2, dadurch gekennzeichnet, daß die Oberflächenwellenbauelemente so miteinander verschaltet sind, daß eines der Elemente als gemeinsame Referenz der übrigen dient.

4. Gassensor nach einem der Ansprüche 1 bis 3, dadurch gekennzeichnet, daß er aus neun Oberflächenwellenbauelementen besteht.

## Claims

1. Gas sensor, comprising at least 2 surface wave components provided with driver and amplifier circuits in a housing provided with gas supplying means and gas discharging means, which sensor includes the following features:
a) at least four SAW surface wave components, which are each disposed in a respective recess in the housing, the recesses in the housing being disposed in a circle in a radially orientated manner,
b) a central, rotationally symmetrical gas supply chamber, from which identically configured gas supply lines extend to the recesses in a radially outward manner, and
c) gas outlet lines having an identical pneumatic resistance and extending outwardly from all recesses.

2. Gas sensor according to claim 1, characterised in that, in the immediate vicinity of the surface wave components on the other side of a lower portion (1) of the housing, a respective oscillator circuit (2) is situated opposite said lower portion.

3. Gas sensor according to claim 1 or 2, characterised in that the surface wave components are so interconnected that one of the components serves as a common reference for the others.

4. Gas sensor according to one of claims 1 to 3, characterised in that it comprises nine surface wave components.

## Revendications

1. Détecteur de gaz se composant d'au moins deux éléments constitutifs à ondes de surface avec circuits d'attaque et d'amplification dans un boîtier avec une alimentation pour les gaz et une évacuation pour les gaz, détecteur qui présente les caractéristiques suivantes :
a) au moins quatre éléments constitutifs à ondes de surface (SAW), disposés chacun dans un évidement dans le boîtier, tandis que les évidements sont orientés radialement dans le boîtier et disposés sur un cercle,
b) une chambre centrale d'alimentation pour les gaz, symétrique de révolution, à partir de laquelle des conduites d'amenée pour les gaz, constituées de façon identique radialement vers l'extérieur, sont dirigées vers les évidements et
c) des conduites d'évacuation des gaz avec la même résistance pneumatique partent de tous les évidements vers l'extérieur.

2. Détecteur de gaz, selon la revendication 1,
caractérisé en ce qu'
à proximité immédiate des éléments constitutifs à ondes de surface, se trouve sur l'autre face d'une partie inférieure (1) du boîtier un circuit oscillateur (2) en regard de celle-ci.

3. Détecteur de gaz, selon la revendication 1 ou 2,
caractérisé en ce que
les éléments constitutifs à ondes de surface sont branchés les uns avec les autres d'une manière telle que l'un des éléments sert de référence commune aux autres.

4. Détecteur de gaz, selon l'une des revendications 1 à 3,
caractérisé en ce qu'
il se compose de neuf éléments constitutifs à ondes de surface.
